# EUROPEAN PATENT APPLICATION

(11) **EP 0 679 422 A1**
(43) Date of publication of application: **02.11.1995**
(21) Application number: 95201113.8
(22) Date of filing: 28.04.1995
(51) Int. Cl.: B01D 21/00, B01D 21/02, B01D 21/24

(54) **Method and device for desalinating dredged material**

(30) Priority: 28.04.1994 NL 9400691
(71) Applicant: HOLLANDSCHE BETON GROEP N.V., NL-2285 TA Rijswijk (NL)
(72) Inventor: van der Schrieck, Gérard Louis Marie, NL-2613 BW Delft (NL); Lucieer, Willem Jan, NL-2253 EB Voorschoten (NL)
(74) Representative: de Bruijn, Leendert C.

(57) **Abstract**

A method for desalinating dredged material, comprising placing a mixture of salt water and sediments in a container and feeding in a flushing medium near the bottom side of the container, in order to flush the mixture from the bottom upwards, and discharging the salt water expelled during flushing at the top side of the container. The container is placed in a quantity of flushing medium, in such a way that the flushing medium is fed into the container under the influence of the difference in hydrostatic pressure outside and inside the container. The corresponding device for carrying out this method comprises a tank in which a flushing medium can be placed, a container which is situated in the tank and in which a mixture of salt water and sediments can be placed, means for discharging the flushing medium used for the flushing together with the expelled salt water, and means for transferring the flushed sediments from the container to the tank.

## Description

The invention relates to a method for desalinating dredged material, comprising placing a mixture of salt water and sediments in a container and feeding in a flushing medium near the bottom side of the container, in order to flush the mixture from the bottom upwards, and discharging the salt water expelled during flushing at the top side of the container.

Such a method is known, and is used in particular in the extraction of sea sand which is intended for depositing on land. In view of the fresh water environment present on dry land, such sea sand must be desalinated before it can be used.

For the extraction of dredged material such as sea sand, a hopper dredger which sucks up the sand and transports it in its well to an unloading point can be used. After the dredged material has been unloaded, it must then be desalinated. According to a known technique, the dredged material is placed for this purpose in an "up-flushing hopper", to which a flushing medium such as fresh water is supplied at the bottom side. A mixture of flushing medium and salt water is discharged at the top side of the hopper, while the desalinated dredged material, in practice sand, can be removed at the bottom side of the hopper.

This known method has a number of disadvantages. First of all, desalinating the dredged material in such a way is time-consuming, since the dredged material has to undergo a number of additional handling operations, such as unloading at the desalination device, storage after desalination of the treated material, and removal thereof to the destination. Besides, there is the risk of the upward directed groundwater gradient becoming too great, as a result of which local fluidization and short-circuit flow can occur. In that case local leakage channels occur in the dredged material, along which the major part of the flushing medium can escape, so that the major part of the dredged material cannot be desalinated.

The problem does not occur when a greater quantity of flushing medium is fed in, but the disadvantage of such an approach is the unacceptably high consumption of flushing medium.

Other known desalination techniques, which use large quantities of flushing medium, and in the case of which there is also a great chance of the occurrence of leakage channels, are the techniques used, inter alia, in the case of hopper dredgers and in underwater dumping pits.

In such cases, the dredged material is flushed with fresh water or brackish water from the bottom by means of flushing pipes on which nozzles or openings are provided. In the case of a hopper dredger, the required flushing medium of brackish or fresh water could be drawn from a river or similar waterway if the dredger is operating on it.

Another possibility in the case of hopper dredgers or vessels with a well is to flush the load from the top downwards.

In this method fresh or brackish water is supplied to the top of the settled load. Drainage plates or pipes, connected to an extraction pump, are provided in the bottom of the well. The salty interstitial water is displaced by sucking the fresh water downwards. By in this case also ensuring that the load is "drawn dry" as far as possible, i.e. that the groundwater level in the load is lowered, a reasonable result can be achieved even with brackish flushing water.

The object of the invention is therefore to provide a method of the type described above which does not have the abovementioned disadvantages. That object is achieved through the container being placed in a quantity of flushing medium in such a way that the flushing medium is fed into the container under the influence of the difference in hydrostatic pressure outside and inside the container.

The flushing medium can now be fed into the container in a readily controllable manner, which prevents the formation of leakage channels in the dredged material. The hydrostatic pressure difference, which depends on the level differences between the flushing medium and the dredged material, can be maintained in this case, if the sediments from the flushed mixture are discharged into the quantity of flushing medium outside the container. Since the volume of flushing medium which escapes is replaced by a volume of sediments: there is a more or less automatic arrangement for maintaining the level difference.

The invention also relates to a device for carrying out the method described above. This device comprises a tank in which a flushing medium can be placed, a container situated in the tank, in which container a mixture consisting of salt water and sediments can be placed, means for discharging the flushing medium used for the flushing, together with the expelled salt water, and means for transferring the flushed sediments from the container into the tank.

The container also has an overflow for discharging flushing medium and expelled salt water, and has a settling tank for separating sediment particles and liquid.

The settling tank can be designed in many different ways. However, according to a preferred embodiment, it comprises a plate separator such as that described in Dutch Patent Application NL-A-9301589 (not a prior publication). In this case the plates of the plate separator can be disposed parallel to each other at an angle, and the gaps defined between every two plates at the bottom side are provided with a non-return valve which can be moved into an open position under the influence of the weight of the separated particles.

Each non-return valve can comprise one or more flexible flaps, which through pre-tensioning, produced by spring force, their own weight and/or liquid pressure difference, combined with the force exerted by the tightly packed layer of settled particles present above the valve, can be held shut in such a way that no upward flows occur.

The flushing medium can be fed into the container in a simple manner in an embodiment in which each plate and/or non-return valve is porous, for the purpose of forcing the flushing medium out of the tank and into the container under the influence of the hydrostatic pressure difference between the inside and outside of the container.

The sediment particles settled in the separator collect on the valve. When a certain thickness of the sediment pile thus forming has been reached, the valve is forced open, in such a way that the particles pass into the tank.

According to a variant, the plate separator can comprise at least three plates which contain a pair of adjacent gaps, one of which is shut off at the bottom side, while the other is bounded by a non-return valve, into which latter gap the mixture for flushing is fed, and in which the middle one of the plates is porous, in such a way that the flushing medium forced into that gap under the influence of the hydrostatic pressure difference can flow out of that gap again into the other gap, entraining the salt water through the pores in the middle plate.

In this variant the flushing medium with the salt water is then discharged through a separate outlet from the gap in which there are no further sediments, with the result that a very good separation can be achieved.

Moreover, each valve can comprise a rubber flap which rests under pre-tension against the middle plate, and the bottom region of the flap and the region of the middle plate adjacent thereto are not perforated, in order to prevent flushing medium leakage flows.

The invention will now be explained in greater detail with reference to a number of figures.

The sediments coming out of the container and passing into the tank may be flushed again with the flushing medium from the tank through pipes present or fitted in the bottom side of the tank, from which pipes the flushing medium is sprayed into the sediments from the side or from the bottom through holes or nozzles. The flushing medium is drawn from the tank and is circulated through the abovementioned pipes by means of a pump, so that for this flushing no flushing medium is lost.

Figure 1 shows a hopper dredger in side view, partially cut away, according to the invention.

Figure 2 shows a first embodiment of the plate separator used in the hopper dredger.

Figure 3 shows a view in perspective of said plate separator.

Figures 4a and 4b show a second embodiment of the plate separator.

Figure 5 shows a view in perspective of said second plate separator.

Figure 6 shows a variant of the first embodiment of the plate separator of Figures 2 and 3.

Figures 7a and 7b show variants of the second embodiment of the plate separator of Figures 4 and 5.

Figure 8 shows a variant, in which the variants of Figures 1 to 7 can be incorporated in a closed system.

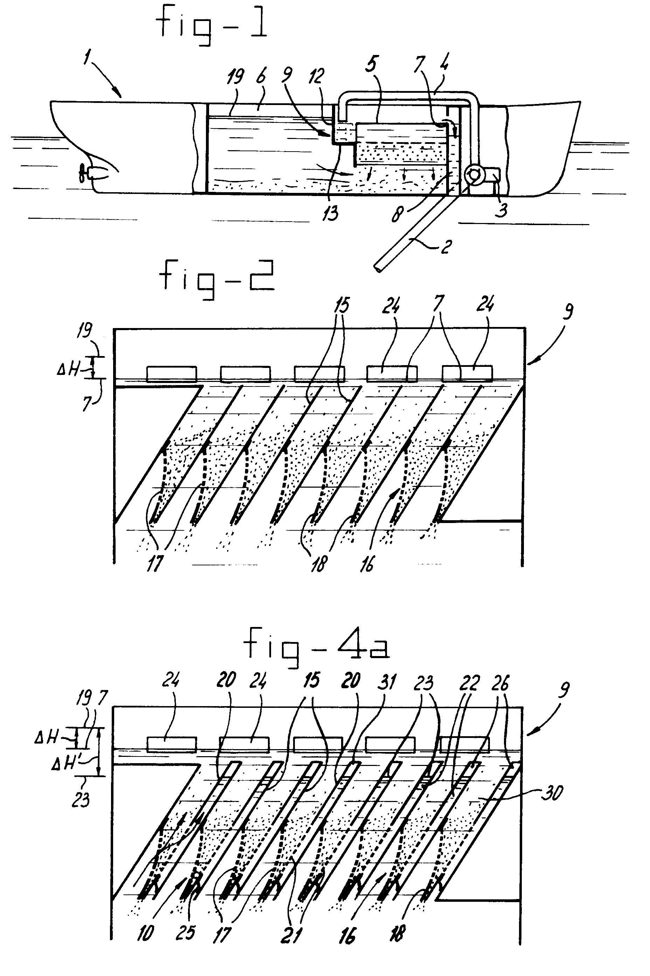

The hopper dredger 1 shown in Figure 1 comprises two suction pipes 2, one of which is partially shown. Dredged material can be sucked up through these suction pipes 2 by means of pump 3, and by way of pressure pipe 4 this dredged material passes into a plate separator indicated in its entirety by 5. Said plate separator is accommodated in the well 6 of the hopper dredger.

In the method according to the invention, the well 6 is filled up with fresh water to a level 19 which lies above the level of the outlet of the plate separator. The outlet level of the plate separator 5 is indicated by 7; it opens out into the outlet channel 8.

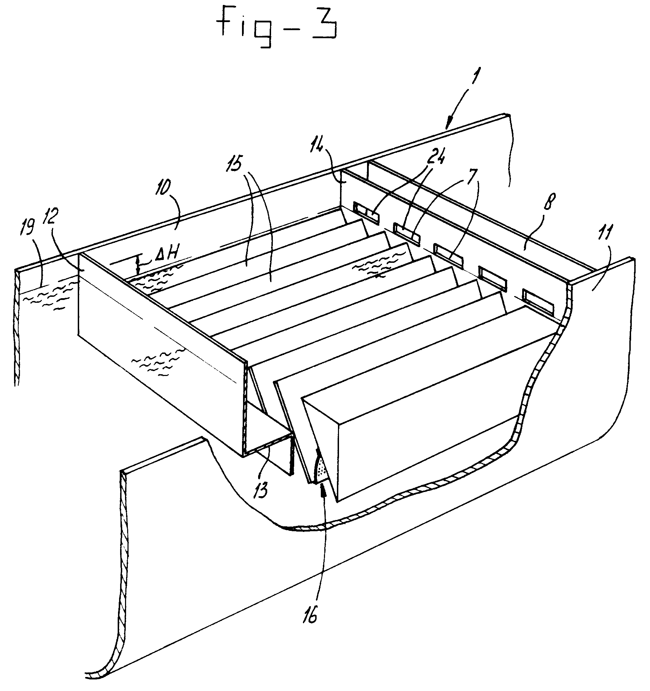

The dredged material supplied through the pressure pipe 4 passes into a container 9 which, as can also be seen in Figure 3, is bounded by the side walls 10 and 11 of the hopper dredger, a rear wall 12, a bottom wall 13, and a front wall 14. Said front wall 14 contains outlet holes 24.

The container 9 is also bounded by a number of slanting plates 15, which at their bottom side are sealed off from each other by flexible valves 16, for example in the form of rubber flaps. The rubber flap 16 fixed to one plate 15 in this case rests under pre-tension against the adjacent plate 15, as can be seen in Figures 2 and 3.

The rubber flaps 16 are perforated in their region 17; their lower region, i.e. their region which rests against an adjacent plate 15, is not perforated.

The dredged material, which in practice consists of, for example, sand mixed with salt water, passes through the pressure pipe 4 into the container 9, and flows along the slanting plates 15 to the outlet holes 24 in the plate 14. Along that stretch the particles in the salt water settle down into the gap formed by each rubber flap 16 and the adjacent plate 15, the above as described in Dutch Patent Application NL-A-9301589 (not a prior publication). When the material arrives at outlet holes 24, the major part of the particles has therefore settled, so that essentially salt water is discharged through outlet channel 8.

As also described in the abovementioned application, the rubber flaps 16 are forced open as soon as a certain quantity of particles has settled in the gap between said valve 16 and the adjacent plate 15. Said particles then pass into the well 6 of the hopper dredger 1, as shown diagrammatically in Figure 1.

According to the invention, there is fresh water in the well 6. This fresh water is taken in before the dredging work starts. The level of the fresh water is indicated by 19; the difference from the lower level 7 of the holes 24 is ΔH. This level difference ΔH between the fresh water in the well at level 19 and the level 7 of the outlet holes 24 leads to an upward hydrostatic pressure being exerted at the bottom side of the rubber flaps 16. The region below the rubber flaps 16 is in fact in free communication with the remainder of the well. As a result of the perforations 17 present in the rubber flaps 16, fresh water penetrates through these perforations into the spaces which lie between the plates 15 and above the rubber flaps 16. The result of this is that the dredged material collecting there is flushed, in the course of which the salt water originally in said material is expelled. Salt water consequently escapes through the outlet holes 24 of the container 9, together with a certain quantity of fresh water.

As already mentioned, when a certain quantity of particles has collected on the rubber flaps 16, the latter open, and that quantity is discharged into the well. The volume in the well consequently increases again, in such a way that a replenishment is obtained for the fresh water forced through the perforations in the valve 16.

So long as the required level difference ΔH is maintained, a considerable degree of desalination of the dredged material can thus be obtained during operation of the hopper dredger.

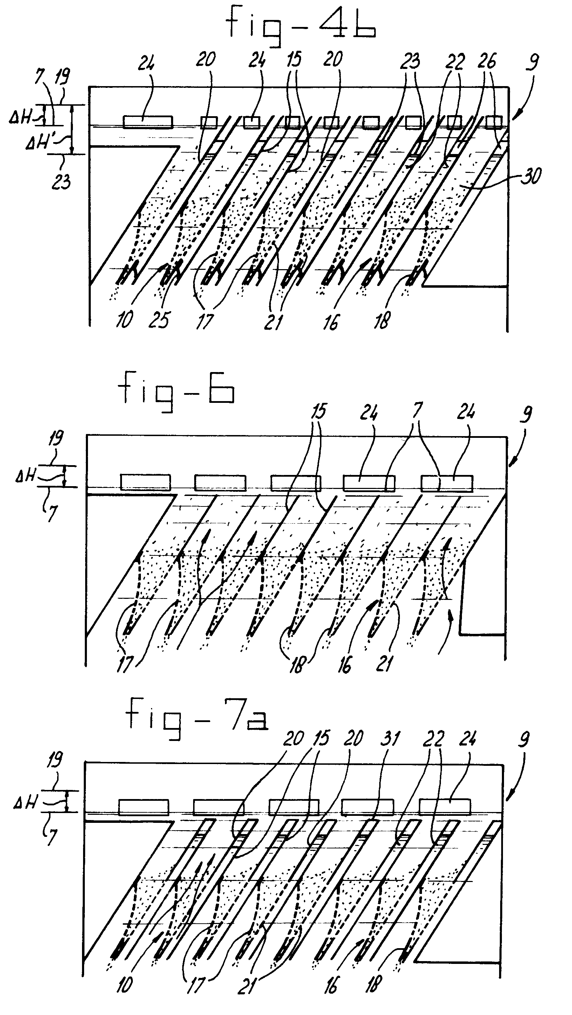

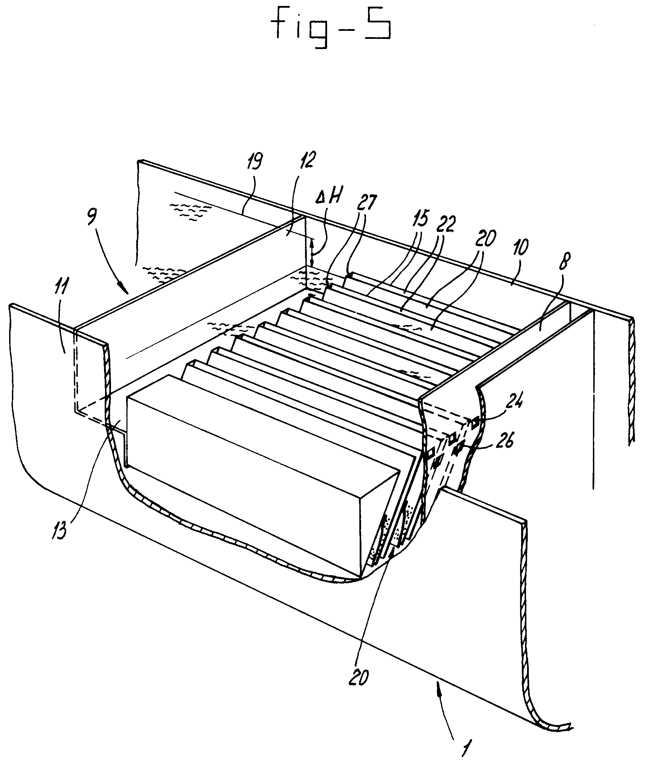

In Figures 4a, 4b and 5, a plate separator also having plates 15 to which rubber flaps 16 are fixed is used. These rubber flaps 16 are likewise perforated at 17 and have an unperforated region 18. The flaps 16 in this case rest against a plate 20 which is likewise perforated at 21. A solid plate 15 is again provided at the side of said plate 20 facing away from the rubber flap 16, in such a way that an outlet gap 22 is formed between each plate 20 and the adjacent plate 15. The level of the outlet holes 26 of these gaps is indicated by 23 in each case. The gap space in which rubber flap 16 is situated is designated as the large gap 30. All this can also be seen in Figure 5.

The bottom side of gap 22 is shut off at a level situated below the perforations 21 in plate 20, and is preferably shut off by a flexible valve 25, such as a rubber flap, which is not perforated.

Level 23 is preferably adjustable relative to level 7, as a result of which an additional fall in pressure over the settled sediments occurs between rubber flap 16 and plate 20. This allows the major part of the fresh water flow to be discharged through gap 22. The remainder of the fresh water flow is discharged through the large gap 30 to the openings 24.

By, for example, fitting valves in openings 26, or by vertical displacement of the bottom edge of openings 26, level 23 can be adjusted, for example relative to level 7 and/or level 19, as a result of which the amount of the fresh water flow through the settled column of sediment particles on rubber flap 16 can in turn be adjusted.

As regards the settling of the particles present in the liquid, this plate separator operates in the same way as the plate separator described with reference to Figures 2 and 3. The particles in this case settle on a rubber flap 16 between the plates 15 and 20. The fresh water penetrating through the perforated part 17 of each rubber flap 16 flushes the dredged material which has collected on said rubber flap, and flows partially through the perforated part 21 of the plate 20 into the gap 22. In the process, the fresh water entrains the salt water present between the particles which have collected on the rubber flap 16.

If the settled sediment particles are sufficiently high on the rubber flap 16, a small part of the fresh water flow goes upwards through the large gap 30 and mixes with the salt water, following which this mixture is discharged through openings 24.

The remaining major part of the fresh water flow passes along the short route through the perforated part 21 and flows upwards into the gap 22 and is discharged through the openings 26. In order to ensure that as much fresh water as possible is made to flow through the settled particles lying on the rubber flap 16, the level 23 in opening 26 can be lower than the level 7 in opening 24. The difference in height ΔH' between well level 19 and level 23 in that case is greater than the height ΔH between well level 19 and level 7. For this purpose, gap 22 is separated from the dredged material flowing into the container.

At the start of the dredging, if there is insufficient height of settled sediment particles on rubber flap 16, the openings 26 can be closed, so that no salt water flows through the large gap 30, through perforation 21, gap 22 and opening 26.

Figures 4a and 4b show two embodiments for this separation. In Figure 4a, the top side of gap 22 is shut off by a top plate 31, which can be made of, for example, flexible material. It is pointed out that the plates 15 and 20 are sealed off as well as possible from bottom wall 13 and front wall 14 by, for example, a very narrow gap or by known flexible sealing means. This rules out short-circuit flows as far as possible.

In Figures 4a and 4b, opening 26 fits into the gap 22 at the top side thereof.

Figure 4b shows an embodiment of the top side of gap 22, in which the plates 15 and 20 project so far above the level 7 that there is no possibility that the dredged material flowing through the separator will flow into gap 22. For this purpose, the openings 24 must be disposed in such a way that they ultimately lie in line with the large gap 30, and below the top edge of the plates 15 and 20.

With this embodiment, it is possible for the salt or brackish water of the dredged material to leave the container 9 through the openings 24, and for the flushing medium, in this case coming out of the well, mixed with salt or brackish water coming out of the pores of the settled sediments, to leave the container 9 through gap 22 and openings 26 and through gap 30 and openings 24.

The loss of fresh water occurring in the well can be made up again through the collected particles passing into said well.

It is possible that the smaller fractions of the settled sediment will be entrained into gap 22 with the flow of fresh water through the perforated part 21 of plate 20. These fractions can then settle on valve 25 and pass into the well in the same way, as described in the abovementioned Patent Application NL-A-9301589.

As can also be seen in Figure 5, each pair of plates 15 and 20 is shut off by a partition 27, at the side facing away from the opening 26.

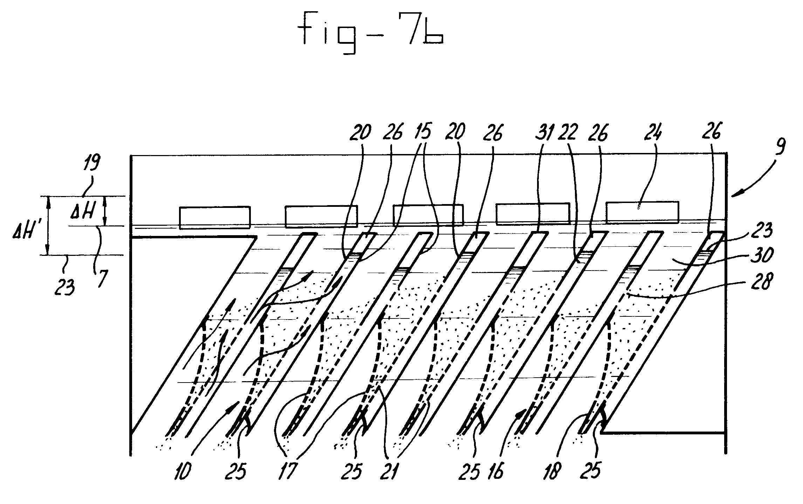

Figure 6 is a variant of Figures 2 and 3. In this case plates 15 are perforated in the region 21. The height of region 21 depends on rubber flap 16. Region 21 begins at the bottom side above the unperforated region 18 of the rubber flap if rubber flap 16 is in contact, and ends at the top side below the fixing point of rubber flap 16, which is fixed in the adjacent gap, in such a way that flushing medium can pass only from one gap opening into the adjacent gap opening and into the settled sediment for desalination thereof. In this variant there are two flushing medium flows, one passing through the rubber flap 16, and the other passing through plate 15.

Figure 7a is a variant of Figures 4 and 5, in which gap 22 is open at the bottom side and has no outflow opening at the top. The top side of gap 22 is shut off by a top plate 31, which is made of, for example, flexible material, as Figure 4a also shows. The separation between gap 22 and the dredged material could also be carried out as shown in Figure 4b, in which case plates 15 and 20 project above level 7. In this case there are again two flushing medium flows, one through rubber flap 16, and the other through the perforated region 21 of plate 15.

Figure 7b shows a variant of Figure 7a in which, apart from the transverse flow which will occur according to Figures 4a or 4b, every even (or odd) large gap 30 has an additional transverse flow.

For this purpose, every odd (or even) plate 15 has perforations 28, just above the fixing point of valve 16, and a valve 25 is provided at the bottom of every even (or odd) gap 22.

Furthermore, there is the hole 26 in the top of said gap 22.

There are no valves 25 and no holes 26 in the other gaps 22.

The additional transverse flushing medium flow now occurs as follows. Flushing medium also flows out of an odd gap 22 through perforation 28 of plate 15 and passes into the large gap 30. The great hydrostatic pressure difference delta-H' means that the major part of this flushing medium flows through the sediments and through perforation 21 of the opposite plate 20. Thereafter, this flushing medium flows through the gap 22 lying behind that and up in the direction of hole 26, through which it can be discharged through outlet channel 8.

Various embodiments of container 9 are possible. For example, container 9 could be placed in a separate tank in the well, which makes it possible to raise the fresh water level above the water level in the well itself by means of a pump. The bottom side of this tank then has, for example, hoppers which have adjustable valves at the bottom side. When the settled sediment in the hoppers is sufficiently high, the sediment is admitted into the well by opening the valves, in such a way that a negligible short-circuit flow arises from the tank through the sediment and the valve in the direction of the well. The valves can be controlled by means of control measurements.

The discharge of salt, brackish or fresh flushing water through the openings 24 and 26 can also be carried out through the side of the vessel, instead of through outlet channel 8.

Another embodiment could be that there are several containers 9 present in the well, or that the container 9 is mobile in the well, with the result that the well is uniformly loaded.

Connections between the openings 24, 26 and outlet channel 8 are then made by means of pipes or in some other way.

If the slanting position of the plates of plate separator 5 has to be changed on account of the granular structure of the sediments to be separated out, it is possible for the holes 26 concerned also to be slidable in wall 14, so that said holes 26 always remain within gap 22.

No connection can then arise between gap 22 and large gap 30 when the slanting position of the plates of plate separator 5 is changed. For this, see Figures 4a, 4b, 5 and 7. Something similar also applies to the holes 24 of Figure 4b.

Valve 16 in plate separator 5 may be controlled either solely or additionally by means of measurement signals.

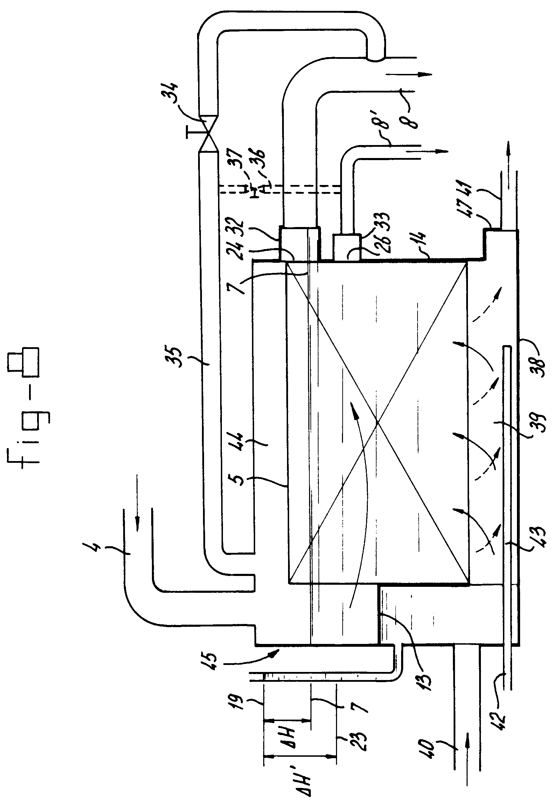

Figure 8 shows a variant in which container 9 and the tank with the flushing medium are, as it were, combined. In this case, the container is closed at the top side, which produces a closed tank 45 with supply and discharge pipes, while the variants of Figures 1 to 7 discussed above can be built in.

It is possible to create an additional vacuum in the space 44 and collection chamber 33, thereby causing the hydrostatic pressure difference to become greater than delta-H or delta-H'. This provides an additional possibility for adjusting the quantity of flushing medium passing through the settled sediment lying on valve 16.

The salt or brackish dredged material with conveying liquid can be fed into tank 45 through pressure pipe 4. This dredged material or material which has been dredged earlier passes above wall 13 and flows through plate separator 5 to openings 24, which are provided in wall 14, and into collection chamber 32. A large part of the sediments settles in the plate separator 5.

The conveying liquid with a residue of the sediments is discharged from collection chamber 32 through outlet pipe 8. Flushing medium of salt or brackish water is fed in through supply pipe 40 to tank 45 by means of a pump and/or a reservoir (not shown). Said flushing medium reaches space 39 below plate separator 5 and has a hydrostatic pressure there corresponding to level 19.

Through the hydrostatic pressure differences of delta-H and delta-H', respectively, the flushing medium is consequently forced through perforations 17 and 21 and through the settled sediments. The flushing medium, which has become saltier, is conveyed through the large gap 30 and gap 22 to the holes 24 and/or 26, respectively. This flushing medium passes through holes 24 into collection chamber 32 and is then discharged through outlet pipe 8.

The part of the flushing medium flowing away through holes 26 passes into collection chamber 33 and is then discharged through outlet pipe 8'. The latter used flushing medium could be reused by taking it to the reservoir.

The concentrated sediments come out of plate separator 5 and pass onto and above bottom plate 38. These desalinated sediments are carried by the flushing medium present there to collection chamber 47 and discharged through outlet pipe 41 to a storage tank or basin (not shown), in which the sediments settle and the conveying liquid, which in this case is the flushing medium which has not gone through the plate separator, is separated out and discharged to the reservoir for re-use.

In order to prevent accumulations and clogging on bottom plate 38, additional flushing medium may be fed in through supply pipe 42. Above the bottom plate 38, supply pipe 42 branches out into a pipe system 43, in which nozzles are fitted, which nozzles deliver water jets in the direction of collection chamber 47. This ensures that caked lumps of sediments are quickly dissolved and conveyed to collection chamber 47. Bottom plate 38 could also taper off in the direction of collection chamber 47, with the result that the lumps of sediment are also given a better opportunity to dissolve in the flushing medium.

It is possible to create a vacuum above level 7 and in collection chamber 33, as a result of which the hydrostatic pressure differences delta-H and delta-H' can increase. In order to achieve a vacuum in space 44, which lies above level 7 in tank 45, pipe 35 is fitted between the top side of tank 45 and outlet pipe 8. At the point of connection between pipe 35 and outlet pipe 8 a static vacuum prevails in pipe 8, due to the great flow velocity of the conveying liquid with residues of sediments. The desired vacuum can be obtained in space 44 by means of the adjustable valve 34 fitted in pipe 35.

It is possible to create the desired vacuum in collection chamber 33 by, for example, fitting pipe 36 with adjustable valve 37 between pipe 35 and collection chamber 33 (or outlet pipe 8'). It is also possible to fit pipe 36 between outlet pipe 8 and collection chamber 33, or outlet pipe 8'. The pressure difference delta-H' can be increased or regulated better in this way.

## Claims

1. Method for desalinating dredged material, comprising placing a mixture of salt water and sediments in a container and feeding in a flushing medium near the bottom side of the container, in order to flush the mixture from the bottom upwards, and discharging the salt water expelled during flushing at the top side of the container, characterized in that the container is placed in a quantity of flushing medium in such a way that the flushing medium is fed into the container under the influence of the difference in hydrostatic pressure outside and inside the container.

2. Method according to Claim 1, in which the sediments from the flushed mixture are discharged into the quantity of flushing medium outside the container.

3. Method according to Claim 1 or 2, in which the flushing medium is accommodated in a tank surrounding the container.

4. Method according to Claim 1, 2 or 3, in which the mixture is fed in continuously.

5. Method according to Claim 1, 2, 3 or 4, in which a vacuum is created in the container.

6. Device for carrying out the method according to one of the preceding claims, comprising a tank in which a flushing medium can be placed, a container which is situated in the tank and in which a mixture of salt water and sediments can be placed, means for discharging the flushing medium used for the flushing, together with the expelled salt water, and means for transferring the flushed sediments from the container to the tank.

7. Device according to Claim 6, in which the container has an overflow for discharging flushing medium and expelled salt water.

8. Device according to Claim 6 or 7, in which a vacuum is created in the container.

9. Device according to Claim 7 or 8, in which the container comprises a settling tank for separating sediment particles and liquid.

10. Device according to Claim 9, in which the settling tank comprises a plate separator.

11. Device according to Claim 9 or 10, in which the plates of the plate separator are disposed parallel to each other at an angle, and the gaps defined between every two plates at the bottom side are provided with a non-return valve which can be moved into an open position under the influence of the weight of the separated particles.

12. Device according to Claim 11, in which a gap is provided with its own non-return valve at its bottom side.

13. Device according to Claim 11 or 12, in which each non-return valve comprises one or more flexible flaps, which through pre-tensioning, produced by spring force, their own weight and/or liquid pressure difference, combined with the force exerted by the packed layer of settled particles present above the valve, can be held shut in such a way that no upward sediment flows occur.

14. Device according to Claim 13, in which each non-return valve comprises a single rubber flap which is fixed by its top side to a plate in each case and rests with its bottom side under pre-tension against an adjacent plate.

15. Device according to one of Claims 11 - 14, in which each plate and/or non-return valve is porous, for the purpose of forcing the flushing medium inwards out of the tank and into the container under the influence of the hydrostatic pressure difference between the inside and outside of the container.

16. Device according to one of Claims 11 - 14, in which the plate separator comprises at least three plates which determine a pair of adjacent gaps, one of which is shut off at the bottom side, while the other is bounded by a non-return valve, into which latter gap the mixture for flushing is fed, and in which the middle one of the plates is porous, in such a way that the flushing medium forced into that gap under the influence of the hydrostatic pressure difference can flow out of that gap again into the other gap, entraining the salt water through the pores in the middle plate.

17. Device according to Claim 16, in which the flushing medium with the salt water entrained therein is discharged from each gap through a separate outlet (24, 26).

18. Device according to Claim 17, in which at least one outlet (24, 26) can be shut off.

19. Device according to Claim 17 or 18, in which at least one outlet (24, 26) has an adjustable level.

20. Device according to Claim 16, 17, 18 or 19, in which each valve comprises a rubber flap which rests under pre-tension against the middle plate, and the bottom region of the flap and the region of the middle plate adjacent thereto are not perforated, in order to prevent flushing medium leakage flows.

21. Device according to one of Claims 12 - 20, in which at least one valve (16, 25) is provided with control means for opening or closing said valve on the basis of measured data.

22. Device according to one of Claims 6 - 21, in which the container is mobile in or on the tank in which the flushing medium can be placed.

23. Device according to one of Claims 6 - 22, in which the container is closed.

24. Hopper dredger, provided with a device according to one of the preceding claims, in which the tank in which the flushing medium can be placed is formed by the well, the container is situated in said well, and the outlet of the container coincides with or is connected to the outlet of the well, and/or discharges through a channel or pipe discharging at the side of the hopper dredger.
